# EUROPÄISCHE PATENTANMELDUNG

(11) **EP 4 480 905 A1**
(43) Veröffentlichungstag der Anmeldung: **25.12.2024**
(21) Anmeldenummer: 23180319.8
(22) Anmeldetag: 20.06.2023
(51) Int. Cl.: C01B 3/04, B01J 8/06, B01J 19/24, C01B 21/02

(54) **VERFAHREN ZUR VERBRENNUNG VON AMMONIAK ZUR WÄRMEERZEUGUNG IN INDUSTRIELLEN BRENNPROZESSEN**

(71) Anmelder: Ammonigy GmbH, 70563 Stuttgart (DE)
(72) Erfinder: WANNEMACHER, Gerhard, 64390 Erzhausen (DE)
(74) Vertreter: Steffan & Kiehne Patentanwälte PartG mbB

(57) **Zusammenfassung**

Die vorliegende Erfindung betrifft ein mindestens zwei- oder dreistufiges Verfahren zur Verbrennung von Ammoniak mit Luft, welches wenigstens die Stufen 1) und 2) und optional zudem die Stufe 1a) umfasst, nämlich eine partielle und katalytische Oxidation von Ammoniak innerhalb eines Reaktors enthaltend wenigstens einen ersten Katalysator K1 unter Erhalt einer ersten Produktgas-Mischung PM1 in Stufe 1), optional eine weitere partielle Oxidation der nach Durchführung von Stufe 1) erhaltenen ersten Produktgas-Mischung PM1 unter Erhalt einer zweiten Produktgas-Mischung PM2 in Stufe 1a, wobei während der Durchführung von Stufe 1) und optional Stufe 1a) ein Luftunterschuss vorliegt, und eine vollständige Oxidation der nach Stufe 1) erhaltenen ersten Produktgas-Mischung PM1 oder, falls der optionale Schritt 1a) durchgeführt worden ist, der nach Stufe 1a) erhaltenen zweiten Produktgas-Mischung PM2 in Stufe 2), wobei während der Durchführung von Stufe 2) ein Luftüberschuss vorliegt, Produktgas-Mischungen erhältlich unter teilweiser Durchführung dieses Verfahrens, sowie eine Verwendung dieser Produktgas-Mischungen als Brennstoffe in industriellen Brennprozessen.

## Beschreibung

Die vorliegende Erfindung betrifft ein mindestens zwei- oder dreistufiges Verfahren zur Verbrennung von Ammoniak mit Luft, Produktgas-Mischungen erhältlich unter teilweiser Durchführung dieses Verfahrens, sowie eine Verwendung dieser Produktgas-Mischungen als Brennstoffe in industriellen Brennprozessen.

### Stand der Technik / Hintergrund der Erfindung

Ammoniak wird überwiegend aus Erdgas hergestellt, wobei Erdgas als Wasserstoffquelle dient, und eignet sich wegen seines Energieinhaltes grundsätzlich als Brennstoff in industriellen Brennprozessen. Als Vorteile des Einsatzes von Ammoniak sind neben seiner ausreichenden Energiedichte sowie seiner Speicherbarkeit in flüssiger Form und der daraus resultierende kostengünstige Transport insbesondere seine kohlendioxidfreie Verbrennung zu nennen. Eine CO₂-Neutralität bei der Herstellung von Ammoniak ist zudem zumindest dann gewahrt, wenn der zur Synthese benötigte Wasserstoff nicht durch Erdgas, sondern durch Elektrolyse von Wasser hergestellt wird, wobei die hierfür benötigte Energie durch Basis von Solarenergie, Windenergie und/oder Wasserkraft bereitgestellt wird, wodurch sogenannter "grüner Ammoniak" erhältlich ist. Aufgrund bestehender und steigender CO₂-Abgaben und der Verteuerung von Erdgas ist dieses Verfahren gegenüber dem Verfahren ausgehend von Erdgas als Wasserstoffquelle zunehmend konkurrenzfähiger. Zukünftig ist es deshalb zu erwarten, dass grünes Ammoniak in weitaus größerem Maßstab als bisher als Brennstoff eingesetzt wird und damit in der Lage sein wird, üblicherweise in industriellen Brennern verwendetes Erdgas, Flüssiggas (insbesondere Propan und/oder Butan) und/oder Heizöl zu ersetzen und damit einen kohlendioxidfreien Brennprozess zu ermöglichen.

Eine Verwendung von und ein Einsatz von Ammoniak als Energieträger und als Brennstoff in Industriebrennern ist jedoch aus mehreren Gründen mit Nachteilen behaftet. Zum einen ist hier die vergleichsweise geringe Brennbarkeit von Ammoniak zu nennen, die seine Verwendung als Brennstoff erschwert. Grund hierfür ist neben vergleichsweise engen Zündgrenzen und einer vergleichsweise hohen benötigten Zündenergie insbesondere die nur sehr geringe Flammengeschwindigkeit von Ammoniak-Luft-Gemischen, aufgrund derer über ausströmendes Ammoniak in Luft in der Praxis kaum eine stabile Flamme erhalten werden kann. Das Problem der nur sehr geringen Flammengeschwindigkeit von Ammoniak-Luft-Gemischen kann durch verschiedene Maßnahmen vermindert oder gelöst werden wie zum Beispiel durch Zumischung eines gut brennbaren Gases wie Wasserstoff oder Erdgas als Zündhilfe, durch eine Vorheizung des eingesetzten Ammoniaks bzw. der eingesetzten Verbrennungsluft und/oder durch Anreicherung der Verbrennungsluft mit zusätzlichem Sauerstoff. Diese Maßnahmen erfordern jedoch jeweils einen erheblichen Aufwand, sowohl in Bezug auf Verfahrensführung als auch im Hinblick auf höhere anfallende Kosten, wodurch die Verwendung von Ammoniak als Brennstoff ökonomisch weniger vorteilhaft ist bzw. sich insgesamt aus ökonomischen Gründen nicht rentiert. Ein weiterer Nachteil bei der Verwendung von Ammoniak als Brennstoff in Industriebrennern ist darin zu sehen, dass die Abgase von Ammoniak-Flammen neben den Hauptbestandteilen Stickstoff und Wasserdampf auch einen erheblichen Anteil an Stickoxiden enthalten und damit mit der Verbrennung von Ammoniak üblicherweise hohe Stickoxidemissionen einhergehen, was insbesondere aus ökologischen Gründen unerwünscht ist, und zwar gerade dann, wenn diese Emissionen über die für Verbrennungsanlagen national geltenden Grenzwerte für Abgas deutlich hinausgehen wie beispielsweise in Deutschland nach dem Bundesimmissionsschutzgesetz. Aufgrund dieser Nachteile findet Ammoniak derzeit in der Praxis als Brennstoff nach wie vor so gut wie keine Verwendung.

Zur Vermeidung des Nachteils seiner schlechten Brennbarkeit kann Ammoniak vor seiner Verbrennung wieder in Wasserstoff bzw. ein wasserstoffhaltiges Gasgemisch umgesetzt, d.h., gespalten werden. Die Ammoniakspaltung erfolgt dabei üblicherweise katalytisch mittels eines Spaltreaktors zu Wasserstoff und Stickstoff und verläuft endotherm, weswegen eine Energiezufuhr von außen benötigt wird. Diese Energie kann beispielsweise durch Verbrennung eines Teils des durch die Ammoniakspaltung hergestellten Wasserstoffs erzeugt werden. Ein solches Verfahren wird beispielsweise in EP 3 028 990 A1 offenbart. In dem Verfahren gemäß EP 3 028 990 A1 erfolgt eine Spaltung von Ammoniak ohne Zumischung von Luft oder sauerstoffhaltigen Gasen in einem Festbettkatalysator. Die für die endotherme Spaltungsreaktion erforderliche Energie wird durch eine räumlich getrennt stattfindende Verbrennung eines Teils der aus der Ammoniakspaltung erhaltenen Wasserstoff-Stickstoff-Mischung mit Luft erzeugt und über Wärmetauscher dem Festbettkatalysator zur Ammoniakspaltung zugeführt. Nachteilig an dem Verfahren gemäß EP 3 028 990 A1 ist jedoch gerade, dass die für die Ammoniakspaltung benötigte Energie mittels Wärmetauscher dem Spaltkatalysator zugeführt werden muss: Aufgrund der bereits hohen Temperaturen am Festbettkatalysator sind in Bezug auf die Wärmequelle noch höhere Temperaturen erforderlich, was wiederum hohe Anforderungen an den Wärmetauscher stellt und schließlich zu einer Vergrößerung des Spaltreaktors und höherem Materialaufwand führt, was nachteilig ist. Insgesamt ist die erforderliche Reaktorkonstruktion vergleichsweise aufwendig. Zudem enthält das gemäß dem Verfahren von EP 3 028 990 A1 aus der äußeren Befeuerung erhaltene Abgas wegen des vergleichsweise hohen Restanteils an Ammoniak im eingesetzten Produktgas einen erheblichen Anteil an Stickoxiden, was aus den bereits vorstehend dargelegten Gründen nachteilig ist, insbesondere wenn das eingesetzte Produktgas in einem gewöhnlichen industriellen Brenner zur Erzeugung von hohen Temperaturen verbrannt wird. Ferner ist der vergleichsweise geringe Wirkungsgrad als nachteilig anzusehen, da bei Einsatz des Verfahrens gemäß EP 3 028 990 A1 das Abgas aus der äußeren Befeuerung nicht mehr zur Erzeugung der Hochtemperaturwärme genutzt werden kann.

EP 3 059 206 A1 offenbart ebenfalls ein Verfahren, um aus Ammoniak eine brennbare, wasserstoffhaltige Gasmischung zu erzeugen, welche als Brennstoff genutzt werden kann. In dem Verfahren gemäß EP 3 059 206 A1 wird ein Reaktor mit einem zweistufigen Katalysator genutzt, der im Eingangsteil aus einem Oxidationskatalysator zur Oxidation von Ammoniak oder Wasserstoff und im nachgeschalteten Teil aus einem Ammoniak-Spalt-Katalysator zur Spaltung von Ammoniak in Wasserstoff und Stickstoff besteht. Die für die Ammoniakspaltung benötigte Energie wird hauptsächlich durch Oxidation von Wasserstoff durch eine Beimischung von Luft oder Sauerstoff erhalten. Durch eine Teil-Rückführung des Endproduktes Wasserstoff an den Reaktoreingang wird neben der Verfügbarkeit des Wasserstoffs für eine ausreichend hohe Temperatur zur sicheren Zündung des Oxidationskatalysators gesorgt. Die für die Spaltung erforderliche Energie wird dabei innerhalb des Gasgemisches selbst frei und der Einsatz eines Wärmetauschers wie im Verfahren gemäß EP 3 028 990 A1 als zwingend für die Energiezufuhr an die Katalysatorschicht vorgegeben kann in diesem Fall entfallen. Nachteilig an dem Verfahren gemäß EP 3 059 206 A1 sind aber zum einen der vergleichsweise geringere Wasserstoffgehalt im hergestellten Brenngas sowie vor allem die Tatsache, dass das Verfahren gemäß EP 3 059 206 A1 den zwingenden Einsatz eines Kreislaufreaktors erfordert, um einen Teil des generierten Produktstroms enthaltend den benötigten Wasserstoff über eine Pumpe zum Reaktoreingang zurückführen zu können. Nachteilig ist hier insbesondere der Aufwand für das Betreiben der Kreislaufpumpe, insbesondere weil die Pumpe bei der vergleichsweisen hohen Temperatur des Spaltkatalysators zu betreiben ist. Weiterhin bedarf es des Einsatzes von beweglichen Bauteilen, was aufgrund der damit verbundenen Verschlechterung der Betriebssicherheit ebenfalls unerwünscht ist. Zudem enthält auch das gemäß dem Verfahren von EP 3 059 206 A1 erhaltene Produktgemisch aus Wasserstoff und Stickstoff sowie Wasser einen noch zu hohen Restanteil an Ammoniak, der in der anschließenden Verbrennung zu einer hohen Belastung mit Stickoxiden führt, was aus den bereits vorstehend dargelegten Gründen nachteilig ist.

Auch EP 3 878 806 A1 offenbart ein Verfahren, um aus Ammoniak eine brennbare, wasserstoffhaltige Gasmischung zu erzeugen, welche als Brennstoff zur Verwendung in Wärmekraftmaschinen genutzt werden kann. Mittels des Verfahrens gemäß EP 3 878 806 A1 wird eine Ammoniak-Luft-Mischung mit hohem Brennstoffüberschuss und einem Luftanteil, der so gewählt ist, dass die Luftmenge gerade für die Energiebereitstellung mittels Oxidation zur Ammoniakspaltung ausreichend ist, in einem Reaktor mit Oxidationskatalysator und Ammoniak-Spalt-Katalysator derart umgesetzt, dass ein Teil des Ammoniaks zu Wasser und Stickstoff oxidiert wird, während der größere Teil des Ammoniaks in Wasserstoff und Stickstoff gespalten wird, wobei die für die Ammoniakspaltung benötigte Energie durch die Oxidationsreaktion erhalten wird. EP 3 878 806 A1 lehrt explizit, dass nicht umgesetzte Reste an Ammoniak dabei tolerierbar sind, um einen möglichst hohen Wirkungsgrad zu erhalten, wobei der Wirkungsgrad den Heizwert der aus dem Spaltreaktor kommenden Brennstoffe im Verhältnis zum Heizwert des eingesetzten Ammoniaks beschreibt. Eine Abgasreinigung erfolgt im Fall des Einsatzes der Brennstoffe zur Verwendung in Wärmekraftmaschinen in einem separaten Schritt. Nachteilig an dem Verfahren gemäß EP 3 878 806 A1 ist daher, dass das gemäß dem Verfahren von EP 3 878 806 A1 erhaltene Produktgemisch aus Wasserstoff und Stickstoff sowie Wasser aufgrund des hohen Brennstoffüberschusses in der eingesetzten Ammoniak-Luft-Mischung einen zu hohen Anteil an nicht umgesetzten Ammoniak (sogenannter Ammoniakschlupf) und als Folge dessen bei einer nachfolgenden Verbrennung in industriellen Brennprozessen einen zu hohen Anteil an Stickoxiden aufweist, was aus den bereits vorstehend dargelegten Gründen nachteilig ist. Zudem ist auch die in dem Verfahren gemäß EP 3 878 806 A1 eingesetzte Reaktorkonstruktion vergleichsweise aufwendig.

Es besteht daher ein Bedarf, ein Verfahren zur Verbrennung von Ammoniak mit Luft, insbesondere zur Wärmeerzeugung in industriellen Brennprozessen, bereitzustellen, welches die vorgenannten Nachteile von aus dem Stand der Technik bekannten Verfahren zur Verbrennung von Ammoniak nicht aufweist, und welches insbesondere dazu geeignet ist, ein aus der Verbrennung von Ammoniak erhaltenes Produktgasgemisch mit ausreichend geringem Ammoniakschlupf bereitzustellen, und mit welchem, daraus resultierend, keine oder nur möglichst geringe Stickoxidemissionen bei einer Nutzung des erhaltenen Produktgasgemisches als Brennstoff insbesondere in industriellen Brennprozessen einhergehen, wobei das Verfahren aber gleichzeitig ökologisch und ökonomisch möglichst vorteilhaft gestaltet ist und insbesondere kein Vorheizen des eingesetzten Gase oder Gasgemische und keine Verwendung von Zündhilfen erfordert.

### Aufgabe

Eine Aufgabe der vorliegenden Erfindung ist es daher, ein Verfahren zur Verbrennung von Ammoniak mit Luft, insbesondere zur Wärmeerzeugung in industriellen Brennprozessen, bereitzustellen, welches die vorgenannten Nachteile von aus dem Stand der Technik bekannten Verfahren zur Verbrennung von Ammoniak nicht aufweist, und welches insbesondere dazu geeignet ist, ein aus der Verbrennung von Ammoniak erhaltenes Produktgasgemisch mit ausreichend geringem Ammoniakschlupf bereitzustellen, und mit welchem, daraus resultierend, keine oder nur möglichst geringe Stickoxidemissionen bei einer Nutzung des erhaltenen Produktgasgemisches als Brennstoff insbesondere in industriellen Brennprozessen einhergehen, wobei das Verfahren aber gleichzeitig ökologisch und ökonomisch möglichst vorteilhaft gestaltet ist und insbesondere kein Vorheizen des eingesetzten Gase oder Gasgemische und keine Verwendung von Zündhilfen erfordert.

### Lösung

Diese Aufgabe wird gelöst durch die in den Patentansprüchen beanspruchten Gegenstände sowie die in der nachfolgenden Beschreibung beschriebenen bevorzugten Ausführungsformen dieser Gegenstände.

Ein erster Gegenstand der vorliegenden Erfindung ist ein mindestens zwei- oder dreistufiges Verfahren zur Verbrennung von Ammoniak mit Luft, welches wenigstens die Stufen 1) und 2) und optional zudem die Stufe 1a) umfasst, nämlich
1) eine partielle und katalytische Oxidation von Ammoniak innerhalb eines Reaktors enthaltend wenigstens einen ersten Katalysator K1 unter Erhalt einer ersten Produktgas-Mischung PM1,
   wobei während der Durchführung von Stufe 1) ein Luftunterschuss in der Art vorliegt, dass das Mischungsverhältnis Λ zwischen in Stufe 1) zugeführter Luftmenge und der zur stöchiometrischen Oxidation des vorhandenen Ammoniaks zu Stickstoff und Wasser erforderlichen Luftmenge in einem Bereich von 0,30 bis <1,00 liegt,
1a) optional eine weitere partielle Oxidation der nach Durchführung von Stufe 1) erhaltenen ersten Produktgas-Mischung PM1 in der Gasphase unter Erhalt einer zweiten Produktgas-Mischung PM2,
   wobei während der Durchführung von Stufe 1a) noch immer ein Luftunterschuss in der Art vorliegt, dass das Mischungsverhältnis Λ zwischen in Stufe 1) und in Stufe 1a) insgesamt zugeführter Luftmenge und der zur stöchiometrischen Oxidation des vorhandenen Ammoniaks zu Stickstoff und Wasser erforderlichen Luftmenge in einem Bereich von 0,30 bis <1,00 liegt, wobei jedoch das insgesamt nach Durchlaufen beider Stufen 1) und 1a) vorliegende Mischungsverhältnis Λ das nur nach Durchlaufen der Stufe 1) vorliegende V Mischungsverhältnis Λ übersteigt, und
2) eine vollständige Oxidation der nach Stufe 1) erhaltenen ersten Produktgas-Mischung PM1 oder, falls der optionale Schritt 1a) durchgeführt worden ist, der nach Stufe 1a) erhaltenen zweiten Produktgas-Mischung PM2,
   wobei während der Durchführung von Stufe 2) ein Luftüberschuss in der Art vorliegt, dass das Mischungsverhältnis Λ zwischen in Stufe 1), optional in Stufe 1a), sowie in Stufe 2) insgesamt zugeführter Luftmenge und der zur stöchiometrischen Oxidation des vorhandenen Ammoniaks zu Stickstoff und Wasser erforderlichen Luftmenge in einem Bereich ≥1,00 liegt.

Ein weiterer Gegenstand der vorliegenden Erfindung ist eine Produktgas-Mischung PM1 erhältlich nach Durchführung von Stufe 1) des erfindungsgemäßen Verfahrens, oder eine Produktgas-Mischung PM2 erhältlich nach Durchführung von Stufe 1a) des erfindungsgemäßen Verfahrens, wobei die nach Stufe 1) erhältliche erste Produktgas-Mischung PM1 als wesentliche Bestandteile Stickstoff, Wasserstoff und Wasser in Form von Wasserdampf sowie einen Anteil an nicht umgesetzten Ammoniak enthält, wobei der Anteil an nicht umgesetzten Ammoniak >0 aber <5000 ppm, vorzugsweise <1000 ppm ist, und wobei die nach Stufe 1a) erhältliche zweite Produktgas-Mischung PM2 als wesentliche Bestandteile Stickstoff, Wasserstoff und Wasser in Form von Wasserdampf sowie einen Anteil an nicht umgesetzten Ammoniak enthält, wobei der Anteil an nicht umgesetzten Ammoniak >0 aber <2000 ppm, vorzugsweise <750 ppm ist.

Ein weiterer Gegenstand der vorliegenden Erfindung ist eine Verwendung der erfindungsgemäßen Produktgas-Mischungen PM1 und/oder PM2 als Brennstoff in industriellen Brennprozessen, vorzugsweise mittels Durchführung von Stufe 2) des erfindungsgemäßen Verfahrens, insbesondere im Bereich der Glas-, Keramik- und/oder Baustoffindustrie und/oder in der Metallverarbeitung, Gebäudebeheizung und/oder im Betrieb von Wärmekraftmaschinen.

Es wurde überraschend gefunden, dass mittels des erfindungsgemäßen Verfahrens zur Verbrennung von Ammoniak mit Luft ein daraus erhaltenes Produktgasgemisch generiert werden kann, welches nur geringe Mengen an als Edukt eingesetztem Ammoniak enthält, und daher einen nur geringen Ammoniakschlupf verhindert oder aufweist. Insbesondere wurde diesbezüglich gefunden, dass nach Durchführung von Stufe 1) des Verfahrens der im Produktgasgemisch enthaltene Ammoniakgehalt auf beispielsweise <5 000 ppm oder <2 000 ppm oder <1 000 ppm oder sogar auf <750 ppm oder <500 ppm oder <250 ppm abgesenkt werden kann, aber immer noch >0 ppm ist. Im Fall einer Durchführung der optionalen Stufe 1a) des Verfahrens ist eine noch weitere Absenkung des Ammoniakgehalts im dann erhaltenen Produktgasgemisch möglich. Dies gelingt insbesondere aufgrund der Einhaltung der für die Stufen 1) und 1a) vorstehend und nachstehend definierten Mischungsverhältnisse Λ. Mit dem aus dem EP 3 878 806 A1 bekannten Verfahren ist dies nicht möglich, da in diesem im Gegensatz dazu nicht umgesetzte und vergleichsweise hohe Mengen an Ammoniak toleriert werden, um einen möglichst hohen Wirkungsgrad zu erhalten, und daher Mischungsverhältnisse Λ von deutlich unter 0,30 eingesetzt werden.

Es wurde ferner überraschend gefunden, dass mittels des erfindungsgemäßen Verfahrens zur Verbrennung von Ammoniak mit Luft ein daraus erhaltenes Produktgasgemisch nach Stufe 1) oder optional Stufe 1a) generiert werden kann, das als Brennstoff eingesetzt werden kann und bei einer Verbrennung wie beispielsweise gemäß Stufe 2) des Verfahrens, wenn überhaupt, nur sehr geringe Mengen an Stickoxiden emittiert. Insbesondere wurde diesbezüglich gefunden, dass nach Durchführung von Stufe 1) des Verfahrens das erhaltene Produktgasgemisch PM1 im Fall einer Verbrennung eine Stickoxidmenge innerhalb des resultierenden Abgases emittiert, die beispielsweise <500 ppm oder sogar auf <300 ppm oder <200 ppm oder <100 ppm oder <50 ppm ist. Im Fall einer Durchführung der optionalen Stufe 1a) des Verfahrens ist eine noch weitere Absenkung dieser Stickoxidmenge im Fall einer Verbrennung des erhaltenen Produktgasgemisch PM2 möglich. Dies ist insbesondere vorteilhaft, wenn aufgrund gesetzlich geltender Regelungen entsprechende Grenzwerte beachtet und eingehalten werden müssen, in Deutschland beispielsweise nach dem Bundesimmissionsschutzgesetz. Diese nur geringen Stickoxidemissionen sind ein Resultat des nur geringen Ammoniakgehalts in den Produktgas-Mischungen PM1 und PM2, da die Bildung von Stickoxiden primär aus der Verbrennung von Ammoniak im Luftüberschuss erfolgt.

Darüber hinaus wurde gefunden, dass das erfindungsgemäße Verfahren ökologisch und ökonomisch vorteilhaft gestaltet werden kann und insbesondere ohne Vorheizen der eingesetzten Gase bzw. Gasmischung Am und/oder ohne Verwendung von Zündhilfen wie Brennstoffen, beispielsweise Wasserstoff und/oder Erdgas, durchgeführt werden kann.

### Ausführliche Beschreibung

### Verfahren zur Verbrennung von Ammoniak mit Luft

Ein erster Gegenstand der vorliegenden Erfindung ist ein mindestens zwei- oder dreistufiges Verfahren zur Verbrennung von Ammoniak mit Luft, welches wenigstens die Stufen 1) und 2) und optional zudem die Stufe 1a) umfasst. Das Verfahren kann weitere Stufen umfassen, die davor, dazwischen und/oder danach durchgeführt werden.

### Optionale Stufe 0)

Vorzugsweise wird vor Stufe 1) in einer optionalen Stufe 0) des Verfahrens der zur Durchführung von Stufe 1) eingesetzte Reaktor vorzugsweise elektrisch vorgeheizt, vorzugsweise auf eine Temperatur von ≥300 °C. Stufe 0) ist Stufe 1) vorzugsweise zeitlich vorgelagert.

Der optionale Schritt 0) wird vorzugsweise durchgeführt, um eine Zündung der in den Reaktor eingeleiteten Gase bzw. des Gasgemisches zu erleichtern. Zur Vorheizung können auch heiße Flammengase z.B. aus einer Propan-Luft-Flamme in den Reaktoreingang gespült werden, womit der Katalysator K1 aufgeheizt wird. Nach entsprechender Vorwärmung läuft die Oxidation des Ammoniaks dann vorzugsweise ohne weitere Wärmezufuhr von außen weiter.

### Stufe 1)

Stufe 1) sieht eine partielle und katalytische Oxidation von Ammoniak innerhalb eines Reaktors enthaltend wenigstens einen ersten Katalysator K1 unter Erhalt einer ersten Produktgas-Mischung PM1 vor. Während der Durchführung von Stufe 1) liegt ein Luftunterschuss in der Art vor, dass das Mischungsverhältnis Λ zwischen in Stufe 1) zugeführter Luftmenge und der zur stöchiometrischen Oxidation des vorhandenen Ammoniaks zu Stickstoff und Wasser erforderlichen Luftmenge in einem Bereich von 0,30 bis <1,00 liegt. Das im Zusammenhang mit dem Mischungsverhältnis angegebene Symbol Λ ist das Symbol für den griechischen Buchstaben Lambda. Das Mischungsverhältnis Λ kann grundsätzlich jede Art eines Mengenmischungsverhältnisses darstellen einschließlich eines Volumenmischungsverhältnisses. Da in der Praxis jedoch kein ideales Gasverhalten beobachtet wird, stellt das Mischungsverhältnis Λ vorzugsweise ein Molzahlmischungsverhältnis dar.

Luft im Sinne der vorliegenden Erfindung meint das in der Erdatmosphäre vorliegende Gasgemisch. Dem Fachmann ist hierbei klar, dass der wesentlich und zur Oxidation befähigte Bestandteil der Luft Sauerstoff ist, der in einer Menge von etwa 20,95 Vol.-% in der Luft enthalten ist.

Ammoniak wird in Stufe 1) des Verfahrens unter Zumischung von Luft (oder umgekehrt) dem Reaktor zugeführt. Vorzugsweise werden Ammoniak und Luft gleichzeitig zugemischt oder in Form einer Vormischung in den Reaktor eingeführt. Die in Stufe 1) durchgeführte katalytische Oxidation erfolgt unter Luftmangel (Luftunterschuss), der durch das Mischungsverhältnis Λ definiert ist. Daher handelt es sich nur um eine partielle Oxidation des eingesetzten Ammoniaks. Für eine vollständige Oxidation wird in Stufe 1) keine ausreichend hohe Luftmenge zugeführt, so dass diese nicht ablaufen kann.

Vorzugsweise wird kein Erwärmen der in Stufe 1) eingesetzten Gase bzw. Gasmischungen vor Durchführung der Stufe 1), besonders bevorzugt weder ein Erwärmen des eingesetzten Ammoniaks noch der eingesetzten Luftmenge noch einer vorliegenden Ammoniak-Luft-Mischung, durchgeführt, jeweils im Sinne eines Vorheizens. Alternativ ist ein solches Erwärmen aber grundsätzlich möglich, insbesondere wenn bereits warmes Abgas vorhanden ist, was hierfür nutzbar ist.

Vorzugsweise liegt während der Durchführung von Stufe 1) das Mischungsverhältnis Λ zwischen zugeführter Luftmenge und der zur stöchiometrischen Oxidation des vorhandenen Ammoniaks erforderlichen Luftmenge in einem Bereich von 0,30 bis 0,90 oder 0,80, besonders bevorzugt von 0,35 bis 0,70, ganz besonders bevorzugt von 0,40 bis 0,60, noch bevorzugter von 0,45 bis <0,60.

Vorzugsweise wird Stufe 1) kontinuierlich durchgeführt. Vorzugsweise wird das gesamte Verfahren kontinuierlich durchgeführt.

Vorzugsweise erfolgt die Durchführung von Stufe 1) ohne Einsatz von vorzugsweise externen Zündhilfen wie Brennstoffen, beispielsweise Wasserstoff und/oder Erdgas. Vorzugsweise gilt dies für das gesamte Verfahren.

Vorzugsweise liegt die vorzugsweise adiabatische Endtemperatur der nach Stufe 1) erhaltenen ersten Produktgas-Mischung PM1 in einem Bereich von 500 bis 1400 °C, besonders bevorzugt von 600 bis 1200 °C, insbesondere wenn die eingesetzten Gase Luft und Ammoniak bei Raumtemperatur zugesetzt worden sind. Vorzugsweise wird die vorzugsweise adiabatische Endtemperatur der nach Stufe 1) erhaltenen ersten Produktgas-Mischung PM1 durch Einstellen des Mischungsverhältnisses Λ in Stufe 1) erzielt.

Beispielsweise erfolgt die Umsetzung im Reaktor in Stufe 1) bei einer vorzugsweise adiabatischen Endtemperatur von ca. 1000 °C nach der folgenden Reaktionsgleichung:

NH₃ + 0,375 O₂ + 1,5 N₂ → 0,75 H₂O + 2 N₂ + 0,75 H₂.

Zur Vereinfachung der Berechnung wird Luft hier als ein Gemisch von 20 Vol.-% Sauerstoff und 80 Vol.-% Stickstoff angenommen. Der Lambda-Wert des in Stufe 1) eingesetzten Gasgemisches, d.h. das Verhältnis zwischen tatsächlich zugesetzter Luftmenge und zur stöchiometrischen Verbrennung von Ammoniak notwendigen Luftmenge, liegt dann bei 0,50. Eine Erhöhung des Luftanteils führt zur weiteren Temperatursteigerung, eine Herabsetzung bewirkt das Gegenteil. Die Reaktortemperatur liegt daher vorzugsweise in einem Temperaturbereich, der eine weitestgehend vollständige Umsetzung des Ammoniaks sicherstellt, so dass nur ein geringer Ammoniakschlupf verbleibt, vorzugsweise ein Ammoniakschlupf von <0,1 Vol.-%, bezogen auf das Gesamtvolumen der Produktgas-Mischung PM1. Ein möglichst niedriger Ammoniakschlupf stellt sicher, dass in insbesondere in der weiteren Verbrennungsstufe Stufe 2) wenn überhaupt nur geringe Mengen an Stickoxiden gebildet werden.

Vorzugsweise handelt es sich bei dem Reaktor gemäß Stufe 1) um einen Festbettreaktor. Vorzugsweise ist der Reaktor als Strömungsrohrreaktor aufgebaut und enthält wenigstens den ersten Katalysator K1 als Festbettkatalysator, vorzugsweise in Form einer Pelletschüttung. Auch Wabenkatalysatoren oder Katalysatoren aus metallischen Trägern wie sie auch als Autoabgaskatalysatoren verwendet werden, können eingesetzt werden. Da jedoch keine hohen Strömungsgeschwindigkeiten vorliegen und der Druckabfall in der Katalysatorschicht keine besondere Bedeutung hat, stellen Pelletschüttungen die kostengünstigste Variante dar.

Der Reaktor wird vorzugsweise adiabatisch betrieben. Um Wärmeverluste nach außen soweit möglich zu vermeiden, ist er vorzugsweise mit einer entsprechenden Isolation umgeben. Die Isolation muss bei hohen Temperaturen stabil bleiben.

Vorzugsweise ist der im Reaktor gemäß Stufe 1) vorhandene erste Katalysator K1 ein Katalysator zur Spaltung von Ammoniak in Stickstoff und Wasserstoff, wobei die katalytisch aktive Komponente des Katalysators K1 vorzugsweise wenigstens ein Metall umfasst, besonders bevorzugt wenigstens ein Metall ausgewählt aus der Gruppe umfassend Nickel, Eisen, Ruthenium und Mischungen davon, wobei der Katalysator K1 vorzugsweise auf wenigstens einem Träger, besonders bevorzugt auf wenigstens einem Träger umfassend Aluminiumoxid und/oder Magnesiumoxid als Trägermaterial(ein) aufgebracht ist. Das vorstehend genannte wenigstens eine Metall ist dabei vorzugsweise in einer Menge in einem Bereich von 0,3 bis 10 Gew.-%, bezogen auf das Gesamtgewicht des Katalysators K1, darin enthalten. Nickel, insbesondere aufgebracht auf einen Träger umfassend Aluminiumoxid, ist besonders bevorzugt als K1. Die Verwendung von Ruthenium erlaubt eine etwas niedrigere Reaktortemperatur bei vergleichbarem Ammoniakschlupf, jedoch ist Ruthenium teurer als Nickel. Wie vorstehend erwähnt spaltet Katalysator K1 Ammoniak vorzugsweise in Stickstoff und Wasserstoff und stellt somit einen Spaltkatalysator dar. Parallel dazu oxidiert der Katalysator K1 bei Anwesenheit von Sauerstoff zudem Wasserstoff zu Wasser oder auch Ammoniak zu Stickstoff und Wasser.

Vorzugsweise ist neben dem ersten Katalysator K1 wenigstens ein zweiter Katalysator K2 im Reaktor gemäß Stufe 1) vorhanden, welcher vorzugsweise ein Katalysator zur Oxidation von Ammoniak in Stickstoff und Wasser ist, wobei die katalytisch aktive Komponente des Katalysators K2 vorzugsweise wenigstens ein Metall umfasst, besonders bevorzugt wenigstens ein Metall, welches sich von der katalytisch aktiven Komponente des Katalysators K1 unterscheidet, ganz besonders bevorzugt, welches ausgewählt ist aus der Gruppe umfassend Platin, Palladium und Mischungen davon, wobei der Katalysator K2 vorzugsweise auf wenigstens einem Träger, besonders bevorzugt auf wenigstens einem Träger umfassend Aluminiumoxid und/oder Magnesiumoxid als Trägermaterial(ein) aufgebracht ist, ganz besonders bevorzugt auf demselben Träger, auf dem auch Katalysator K1 aufgebracht ist. Das vorstehend genannte Metall ist dabei vorzugsweise in einer Menge in einem Bereich von 0,2 bis 10 Gew.-%, bezogen auf das Gesamtgewicht des Katalysators K2, darin enthalten. In der Praxis wird der Katalysator K2 oftmals im Gegensatz zu sogenannten Spaltkatalysatoren als Oxidationskatalysator bezeichnet.

Die zusätzliche Gegenwart des zweiten Katalysators K2 ist insbesondere deshalb vorteilhaft, um den Reaktorstart auch bereits bei relativ niedrigen Temperaturen zu ermöglichen, insbesondere wenn der Katalysator K2 bevorzugt an der Eingangsseite des Reaktors positioniert ist, also an der Seite, in den die Gase bzw. das Gasgemisch eingeleitet werden, wodurch zudem höhere Strömungsgeschwindigkeiten der Gase bzw. der Gasmischung möglich sind. Am Oxidationskatalysator K2 startet die Reaktion zwischen Ammoniak und Luftsauerstoff bereits bei im Vergleich zum Katalysator K1 deutlich niedrigeren Temperaturen. Unter diesen Voraussetzungen genügt vorzugsweise eine Vorwärmung des Reaktors gemäß vorstehend definiertem Schritt 0) auf ca. 300 °C. Eine andere Möglichkeit des Reaktorstarts besteht z.B. darin, die Vorheizung mit Wasserstoff-Luft-Gemischen unterhalb der Explosionsgrenzen durchzuführen. Bei der Verwendung von zusätzlichem Platin-Oxidationskatalysator als K2 genügt hier beispielsweise bereits eine Vorheizung des Reaktors auf etwa 100 °C. Vorteilhafterweise kann somit durch die Gegenwart des zweiten Katalysators K2 das Temperaturniveau im Katalysatorbett abgesenkt werden.

Insbesondere wenn neben dem wenigstens einen Katalysator K1 zudem der wenigstens eine Katalysator K2 vorhanden ist, ist vorzugsweise erst eine Oxidation von Ammoniak zu Wasser solange möglich, bis der Sauerstoff verbraucht ist. Die damit einhergehende Temperaturerhöhung kann dann vorzugsweise zur Spaltung des restlichen Ammoniaks in Wasserstoff und Stickstoff unter Wärmeverbrauch bis zur adiabatischen Endtemperatur führen bzw. genutzt werden. In der Praxis ist jedoch davon auszugehen, dass sich beide Reaktionen überschneiden.

Vorzugsweise ist die Geometrie des zur Durchführung von Stufe 1) eingesetzten Reaktors, welcher vorzugsweise ein Rohrreaktor ist, und/oder die Temperatur des Katalysators K1 und gegebenenfalls K2 so gewählt, dass ein ausreichender Wärmetransport wenigstens durch Wärmestrahlung gegen die Strömungsrichtung der in den Reaktor eingeleiteten Gase bzw. Gasmischung erfolgen kann, wobei die Geometrie vorzugsweise das Verhältnis von Rohrquerschnitt zu Rohrlänge beschreibt. Da die Oxidation gemäß Stufe 1) vorzugsweise primär am Katalysator K1 und gegebenenfalls zusätzlich vorhandenem Katalysator K2 und nicht in der Gasphase erfolgt, besteht bei der Umsetzung in einem Rohrreaktor die Tendenz, dass der Reaktor an der Eingangsseite durch das kalte eingeleitete Frischgas ausgekühlt wird, sich diese Auskühlung längs des Reaktors ausbreitet und die Reaktion schließlich insgesamt erlischt. Zur Vermeidung dieses Effektes wird vorzugsweise die Strömungsgeschwindigkeit des Gases bzw. Gasgemisches in der Katalysatorschicht relativ klein gehalten, beispielsweise innerhalb eines Bereichs von 10 bis 30 cm/s. und es wird für einen ausreichenden Wärmetransport gegen die Strömungsrichtung des Gases bzw. Gasgemisches gesorgt, damit die Reaktion nicht abreißt. Beim Abreißen der Reaktion würde die Reaktionszone immer weiter in Richtung Reaktorausgang verschoben werden, bis der Reaktor schließlich ausginge.

Vorzugsweise wird durch die gewählte Geometrie des Reaktors die Strömungsgeschwindigkeit der in den Reaktor eingeleiteten (frischen) Gase bzw. Gasmischung vorteilhaft eingestellt, nämlich derart, dass ein ausreichender Wärmetransport wenigstens und vorzugsweise überwiegend durch Wärmestrahlung gegen die Strömungsrichtung der in den Reaktor eingeleiteten Gase bzw. Gasmischung erfolgt. Die Wahl der Geometrie des Reaktors und damit der Strömungsgeschwindigkeit der Gase bzw. Gasmischung und/oder die Einstellung der Katalysatortemperatur ermöglichen, dass eine stationäre Reaktionszone innerhalb des Reaktors ausgebildet werden kann und der Reaktor nicht durch das Frischgas, d.h. durch in den Reaktor neu eingeleitete (frische) Gase bzw. Gasmischung ausgeblasen wird.

Zur Verringerung der Strömungsgeschwindigkeit ist der Querschnitt des Reaktors vorzugsweise vergrößert. Für den Wärmetransport gegen die Strömungsrichtung des Gases oder Gasgemisches sind verschiedene Faktoren maßgeblich. Dazu gehören die Wärmeleitung im Gas selbst, im Katalysatorbett, im Reaktorbehälter und im Isolationsmaterial sowie die Wärmestrahlung des glühenden Katalysators und des Reaktorbehälters in Richtung der kälteren Eingangsseite des Reaktors. Die Wärmeleitung im Gas, Katalysatorbett und Isolationskörper ist gegenüber der Wärmeleitung im Reaktorbehälter und der Wärmestrahlung im Allgemeinen klein. Für das Gas gilt diese Aussage mindestens für den Fall, dass keine Rückvermischung erfolgt. Zur Gewährleistung eines einfachen Reaktoraufbaus wird auf die Rückvermischung verzichtet. Der Reaktorbehälter selbst kann wegen der guten Wärmeleitfähigkeit des eingesetzten Metalls einen nennenswerten Beitrag zum Wärmerücktransport leisten. Dieser Effekt wird jedoch mit zunehmendem Reaktordurchmesser geringer. Demgegenüber kann eine Verbesserung durch zusätzliche metallische Einbauten in der Katalysatorschicht erreicht werden, die den Wärmerücktransport auf die Eingangsseite steigern. Zusätzliche Einbauten verkomplizieren jedoch die Reaktorkonstruktion und stören den Aufbau der Katalysatorschüttung durch die Randgängigkeit der Gase. Den wesentlichen Beitrag zum Wärmerücktransport leistet die Wärmestrahlung, insbesondere wenn die Gasströmung nicht zu schnell gewählt wird und im Reaktor eine ausreichend hohe Temperatur vorliegt. Da die Wärmestrahlung nach dem Stefan-Boltzmann-Gesetz nach der vierten Potenz der Temperatur ansteigt, steigt die Strahlung ab einer gewissen Katalysatortemperatur am Reaktorausgang steil an, so dass ein entsprechender Wärmetransport in Richtung des Reaktoreingangs erfolgt. Durch die Aufnahme der Strahlungswärme der kälteren Katalysatorteile in Richtung Reaktoreingang wird dort die Temperatur derart erhöht, dass die Oxidation des Ammoniaks an der Katalysatoroberfläche in Gang gesetzt wird und die Temperatur weiterhin ansteigt. Der Prozess führt mit fortschreitender Zeitdauer dazu, dass die Hauptreaktionszone immer weiter in Richtung Reaktoreingang verschoben wird, bis sie am Anfang der Katalysatorschicht zum Stillstand kommt. In der Praxis führt die Prozessführung bei günstiger Auslegung des Reaktors hinsichtlich der Gasströmungsgeschwindigkeit und der adiabatischen Endtemperatur damit vorteilhafterweise dazu, dass im stationären Zustand die Hauptreaktionszone am Eingang der Katalysatorschicht hängen bleibt und nicht in Richtung Reaktorausgang verschoben wird, was schließlich zum Verlöschen der Reaktion führen würde.

Vorzugsweise enthält die nach Stufe 1) erhältliche erste Produktgas-Mischung PM1 als wesentliche Bestandteile Stickstoff, Wasserstoff und Wasser in Form von Wasserdampf sowie einen Anteil an nicht umgesetzten Ammoniak (Ammoniakschlupf), wobei der Anteil an nicht umgesetzten Ammoniak vorzugsweise >0 ppm und <5 000 pm, vorzugsweise >0 und <1000 ppm ist.

Der Anteil an Ammoniak in PM1 ist abhängig von dem in Stufe 1) vorliegenden bzw. gewählten Mischungsverhältnis Λ. Vorzugsweise enthält die erste Produktgas-Mischung PM1 40 bis 70 Vol.-%, insbesondere 52 bis 62 Vol.-%, Stickstoff, 15 bis 30 Vol.-%, insbesondere 19 bis 24 Vol.-%, Wasserstoff, sowie 15 bis 30 Vol.-%, insbesondere 19 bis 24 Vol.-%, Wasserdampf, sowie gegebenenfalls ein oder mehrere weitere Bestandteile in geringen Mengen, wobei sich die Anteile aller in PM1 vorhandenen Bestandteile auf 100 Vol.-% summieren. Der Anteil an Ammoniak ist dabei unter die ein oder mehreren weiteren Bestandteilen zu subsumieren und liegt wie vorstehend erwähnt vorzugsweise in einem Bereich von >0 und <5 000 pm, vorzugsweise >0 und <1000 ppm. Der Anteil an nicht umgesetztem Ammoniak sollte vergleichsweise klein gehalten werden, um die mögliche Bildung von Stickoxiden in der nachfolgenden Oxidation gemäß Stufe 2) zu verringern, da zur Erhöhung der Stickoxide im Abgas nach Stufe 2) der Anteil an nicht umgesetztem Ammoniak in PM1 beiträgt. Infolgedessen wird in Stufe 1) eine möglichst vollständige Umsetzung des Ammoniaks im Reaktor bei minimalem Ammoniakschlupf angestrebt. Vorteilhaft hierfür sind hohe Reaktortemperaturen bei möglichst langen Verweilzeiten des Gases im Reaktor. Bei zu hohen Temperaturen können sich Probleme in Bezug auf die Standfestigkeit des Reaktorgefäßes oder die Haltbarkeit des Isolationsmaterials ergeben. Lange Verweilzeiten führen zu größeren Reaktoren und damit auch zu höheren Anlagenkosten. Vorzugsweise liegt die theoretische Verweilzeit der Gase bzw. Gasmischung in der Katalysatorschicht, bezogen auf die Eingangsgasmischung, das Leerrohr ohne Katalysator und Raumtemperatur, bei <3 s, noch bevorzugter bei <2 s. Unter Berücksichtigung des Zwischenkornvolumens der Katalysatorschüttung und der Katalysatortemperatur liegt die tatsächliche Verweilzeit der Gase bzw. Gasmischung in der Katalysatorschicht vorzugsweise bei <1 s, noch bevorzugter bei <0,5 s, noch bevorzugter bei <0,3 s.

Vorzugsweise wird die nach Durchführung von Stufe 1) erhaltene erste Produktgas-Mischung PM1 vor Durchführung von Stufe 2) gekühlt, besonders bevorzugt mittels wenigstens eines Wärmetauschers, über die Einspeisung von Inertgas und/oder über die Einspeisung von Wasser. Durch eine solche Kühlung im Sinne einer Zwischenkühlung kann das Temperaturniveau abgesenkt werden und damit vorzugsweise die mögliche thermische Stickoxidbildung in Stufe 2) weiter verringert werden.

### Optionale Stufe 1a)

Die optionale Stufe 1a) sieht eine weitere partielle und katalytische Oxidation der nach Durchführung von Stufe 1) erhaltenen ersten Produktgas-Mischung PM1 in der Gasphase unter Erhalt einer zweiten Produktgas-Mischung PM2 vor. Während der Durchführung von Stufe 1a) liegt noch immer ein Luftunterschuss in der Art vor, dass das Mischungsverhältnis Λ zwischen in Stufe 1) und in Stufe 1a) insgesamt zugeführter Luftmenge und der zur stöchiometrischen Oxidation des vorhandenen Ammoniaks zu Stickstoff und Wasser erforderlichen Luftmenge in einem Bereich von 0,30 bis <1,00 liegt, wobei jedoch das insgesamt nach Durchlaufen beider Stufen 1) und 1a) vorliegende Mischungsverhältnis Λ das nur nach Durchlaufen der Stufe 1) vorliegende Mischungsverhältnis Λ übersteigt. Trotzdem ist das Mischungsverhältnis Λ nach Durchlaufen beider Stufen 1) und 1a) in jedem Fall noch immer <1,00, d.h., es wird mit einem Luftunterschuss (Luftmangel) gearbeitet.

Vorzugsweise liegt während der Durchführung von Stufe 1a) das Mischungsverhältnis Λ zwischen insgesamt zugeführter Luftmenge über die Stufen 1) und 1a) und der zur stöchiometrischen Oxidation des vorhandenen Ammoniaks erforderlichen Luftmenge in einem Bereich von 0,40 bis <1,00, besonders bevorzugt von 0,50 bis <1,00, ganz besonders bevorzugt von 0,60 bis <0,95, noch bevorzugter von 0,70 bis <0,90, liegt.

Vorzugsweise liegt die vorzugsweise adiabatische Endtemperatur der nach Stufe 1a) erhaltenen ersten Produktgas-Mischung PM2 in einem Bereich von 600 bis 1900 °C, besonders bevorzugt von 1000 bis 1800 °C. Vorzugsweise wird die vorzugsweise adiabatische Endtemperatur der nach Stufe 1a) erhaltenen ersten Produktgas-Mischung PM12 durch Einstellen des Mischungsverhältnisses Λ in Stufe 1a) erzielt.

Vorzugsweise wird Stufe 1) nicht in Gegenwart von einem oder mehreren Katalysatoren durchgeführt.

Vorzugsweise enthält die nach Stufe 1a) erhältliche zweite Produktgas-Mischung PM2 als wesentliche Bestandteile Stickstoff, Wasserstoff und Wasser in Form von Wasserdampf sowie einen Anteil an nicht umgesetzten Ammoniak (Ammoniakschlupf), wobei der Anteil an nicht umgesetzten Ammoniak vorzugsweise >0 und <2 000 ppm, noch bevorzugter >0 und <750 ppm ist.

Der Anteil an Ammoniak in PM2 ist abhängig von dem in Stufe 1) und Stufe 1a) insgesamt vorliegenden bzw. gewählten Mischungsverhältnis Λ. Vorzugsweise enthält die zweite Produktgas-Mischung PM2 50 bis 75 Vol.-%, insbesondere 60 bis 70 Vol.-%, Stickstoff, 1 bis 20 Vol.-%, insbesondere 3 bis 18 Vol.-%, Wasserstoff, sowie 15 bis 30 Vol.-%, insbesondere 20 bis 28 Vol.-%, Wasserdampf, sowie gegebenenfalls ein oder mehrere weitere Bestandteile in geringen Mengen, wobei sich die Anteile aller in PM2 vorhandenen Bestandteile auf 100 Vol.-% summieren. Der Anteil an Ammoniak ist dabei unter die ein oder mehreren weiteren Bestandteilen zu subsumieren und liegt wie vorstehend erwähnt vorzugsweise in einem Bereich von >0 und <2 000 ppm, noch bevorzugter >0 und <750 ppm. Der Anteil an nicht umgesetztem Ammoniak sollte vergleichsweise klein gehalten werden, um die mögliche Bildung von Stickoxiden in der nachfolgenden Oxidation gemäß Stufe 2) zu verringern.

Die optionale Stufe 1a) wird insbesondere deshalb durchgeführt, um auch bei einem gewissen Ammoniakschlupf noch niedrige Stickoxidwerte einhalten zu können. Der nach Stufe 1) aus dem Reaktor kommenden Produktgas-Mischung PM1 wird in Stufe 1a) weitere Luft zugeführt. Der Zusatzluftstrom wird aber insoweit begrenzt, dass auch hier wie in der Stufe 1) keine vollständige Verbrennung des aus dem Reaktor kommenden Brennstoffes erfolgen kann, sondern auch nach der Luftzuführung noch ein Brennstoffüberschuss im Gasstrom verbleibt und sich ein Lambda-Wert von weniger als 1,00 ergibt. Ziel von Stufe 1a) ist, den Ammoniakschlupf weiter zu reduzieren.

Die Umsetzung in der Stufe 1a) erfolgt beispielsweise nach dem folgenden Reaktionsschema:

0,75 H₂O + 2 N₂ + 0,75 H₂ + 0,2 O₂ + 0,8 N₂ → 1,15 H₂O + 2,8 N₂ + 0,35 H₂.

Die Luftmenge der zweiten Stufe kann innerhalb gewisser Grenzen variiert werden, jedoch muss das resultierende Gasgemisch noch einen Brennstoffüberschuss enthalten. Eine vollständige Verbrennung unter Luftüberschuss darf nicht erfolgen. Das vorgenannte Beispiel geht davon aus, dass etwa 50 Vol.-% der noch für die vollständige Verbrennung erforderlichen Luftmenge in Stufe 1a) zugefügt werden. Der Lambda Wert steigt in der Stufe1a) im Fall dieses Beispiels von 0,5 (in der ersten Stufe 1)) auf 0,77.

Mit der weiteren Verbrennung in der Stufe 1a) geht eine zusätzliche Temperaturerhöhung einher. Theoretisch wird unter Vernachlässigung der Wärmeverluste für das o.g. Beispiel eine Temperaturerhöhung von ca. 400 °C auf ca. 1400 °C berechnet. Infolge des Brennstoffüberschusses können sich hierbei keine Stickoxide bilden, da diese sofort mit Wasserstoff abreagieren. Allerdings kann hier eine weitere Umsetzung des noch vorhandenen Ammoniaks erfolgen. Durch Spaltung in Wasserstoff und Stickstoff geht der Ammoniakschlupf in der zweiten Stufe weiterhin zurück. Das Gleichgewicht der Bildungsreaktion von Ammoniak verschiebt sich mit ansteigender Temperatur immer weiter auf die Wasserstoffseite. Wegen der hohen Temperaturen läuft die Kinetik dieser Reaktion auch in der Gasphase entsprechend schnell ab, so dass eine weitere Verminderung des Ammoniakschlupfes nach der Stufe 1a) im Vergleich zu Stufe 1) erfolgt.

Vorzugsweise werden die Stickoxidwerte im Flammenabgas bei der Verbrennung nach Durchführung der Stufe 2) von ca. 200 ppm durch die Einführung der weiteren Stufe 1a), d.h. durch die dreistufige Verbrennung, auf unter 100 ppm vermindert. Die von den BlmSchV geforderten Grenzwerte können damit noch leichter eingehalten werden.

Vorzugsweise wird die nach Durchführung von Stufe 1a) erhaltene zweite Produktgas-Mischung PM2 vor Durchführung von Stufe 2) gekühlt, besonders bevorzugt mittels wenigstens eines Wärmetauschers, über die Einspeisung von Inertgas und/oder über die Einspeisung von Wasser. Durch eine solche Kühlung im Sinne einer Zwischenkühlung kann das Temperaturniveau abgesenkt werden und damit vorzugsweise die mögliche thermische Stickoxidbildung in Stufe 2) weiter verringert werden.

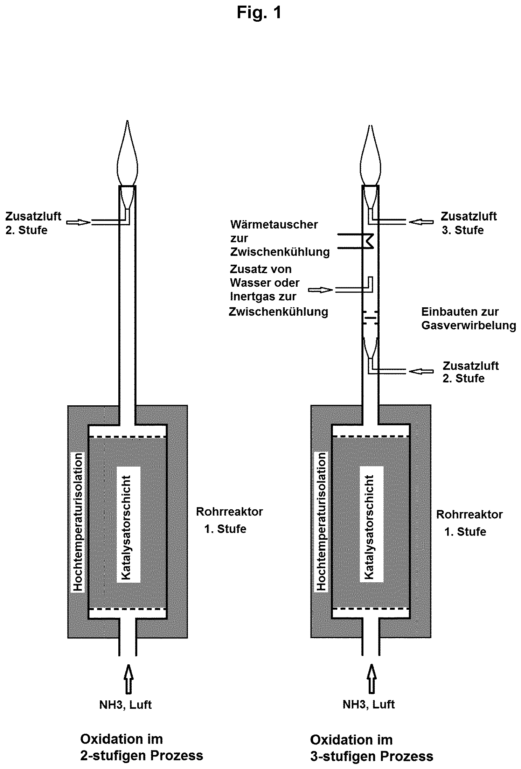

Die Zwischenkühlung bietet den Vorteil, dass dadurch die maximale Endtemperatur in der letzten Verbrennungsstufe 2) abgesenkt und damit das thermisch gebildete Stickoxid zurückgedrängt wird. Die Art der Zwischenkühlung ist von der tatsächlich vorgesehenen Anwendung abhängig, insbesondere von der gewünschten Endtemperatur der Flammengase. Die Einrichtungen zur Zwischenkühlung sind in **Fig. 1** rechts in Bezug auf das dreistufige Verfahren eingezeichnet und bestehen im Einbau eines Wärmetauschers, in der Zumischung von Inertgasen wie z. B. Stickstoff oder dem aus dem vorgesehenen Prozess resultierendem Abgas, welches im allgemeinen nur geringe Sauerstoffmengen enthält, oder in der Eindüsung von Wasser. Insbesondere wenn es bei der Anwendung nicht auf hohe Flammentemperaturen ankommt, kann nach einer entsprechenden Zwischenkühlung die Oxidation in der Stufe 2) auch katalytisch mit geeigneten Oxidationskatalysatoren erfolgen. Diese Methode bietet den Vorteil, dass praktisch keine Stickoxide mehr gebildet werden.

### Stufe 2)

Stufe 2) sieht eine vollständige Oxidation der nach Stufe 1) erhaltenen ersten Produktgas-Mischung PM1 oder, falls der optionale Schritt 1a) durchgeführt worden ist, der nach Stufe 1a) erhaltenen zweiten Produktgas-Mischung PM2 vor. Während der Durchführung von Stufe 2) liegt ein Luftüberschuss in der Art vor, dass das Mischungsverhältnis Λ zwischen in Stufe 1), optional in Stufe 1a), sowie in Stufe 2) insgesamt zugeführter Luftmenge und der zur stöchiometrischen Oxidation des vorhandenen Ammoniaks zu Stickstoff und Wasser erforderlichen Luftmenge in einem Bereich ≥1,00, vorzugsweise >1,00 liegt. Das Mischungsverhältnis Λ nach Durchlaufen beider Stufen 1) und 2) und zudem gegebenenfalls der Stufe1a) ist somit in jedem Fall ≥1,00, d.h., es wird nunmehr insgesamt mit einem Luftüberschuss oder äquivalenter Luftmenge gearbeitet.

Vorzugsweise erfolgt die Oxidation gemäß Stufe 2) mit Luft als Oxidationsmittel in einer offenen Flamme oder katalytisch mittels wenigstens eines geeigneten Oxidationskatalysators.

Wird die nach Stufe 1) erhältliche Produktgas-Mischung PM1 in der Stufe 2) direkt in offener Flamme verbrannt, so gelten beispielsweise, sofern keine Zwischenkühlung erfolgt ist, die folgenden Reaktionswärmen bezogen auf 1 mol eingesetztes Ammoniak:

| | |
|---|---|
| 1. Teiloxidation nach Stufe 1): | Hᵥ = 135,5 kJ/mol NH₃ |
| 2. Teiloxidation nach Stufe 2): | Hᵥ = 181,5 kJ/mol NH₃ |
| 3. Gesamtreaktion: | Hᵥ = 317 kJ/mol NH₃ |

Die adiabatische Flammenendtemperatur nach Stufe 2) liegt dann für Lambda = 1 bei ca. 1600 bis 1900 °C.

Die Produktgas-Mischung PM1 ist wegen der hohen Ausgangstemperatur trotz des relativ niedrigen Wasserstoffgehaltes sehr gut brennbar. Das Gas brennt vorzugsweise in heller Umgebung mit praktisch unsichtbarer, im Dunkeln mit bläulicher Flamme ab. Die Produktgas-Mischung PM1 enthält nur geringe Mengen an Ammoniak (Ammoniakschlupf) und Ammoniak wird als Brennstoff durch die Teiloxidation gemäß Stufe 1) durch Wasserstoff ersetzt, so dass letztendlich eine Wasserstoff-Flamme zur Anwendung kommt. Analoges gilt für die Produktgas-Mischung PM2. Die Stickoxidkonzentrationen können bei offener Flamme im Fall einer entsprechenden Durchführung in Stufe 2) vorzugsweise auf unter 200 ppm (umgerechnet auf 3 Vol.-% Sauerstoffgehalt des Abgases entsprechend den Vorgaben der Bundesimmissionsschutzverordnung (BlmSchV) gedrückt werden, so dass die Vorgaben der BlmSchV eingehalten werden können. Bei der offenen Verbrennung von Ammoniak-Wasserstoff-Gemischen, in denen Wasserstoff als Zündhilfe dient, werden im Abgas dagegen Stickoxidanteile von mindestens 200 ppm bis zu über 1000 ppm erhalten. Im Allgemeinen sind die Stickoxidanteile so hoch, dass die Grenzwerte nach den Bundesimmissionsschutzverordnungen für Feuerungsanlagen kaum eingehalten werden können.

Die Stickoxidkonzentrationen die bei Durchführung von Stufe 2) beobachtet werden, liegen teilweise noch unterhalb der Emission der reinen Wasserstoff-Flamme. Die Unterschiede sind mit der geringeren adiabatischen Flammentemperatur der hier aus Ammoniak erhaltenen Wasserstoff-Flamme gegenüber der reinen Wasserstoff-Flamme zu erklären. Der auf das Volumen bezogene Energieinhalt ist bei der auf Basis von Ammoniak erhaltenen Flamme geringer, so dass sich bei geringerer Flammentemperatur letztendlich weniger thermisches Stickoxid bildet.

Vorzugsweise führt die Oxidation gemäß Stufe 2) zu einer Emission an Stickoxiden von höchstens 250 ppm, besonders bevorzugt von höchstens 200 ppm, noch bevorzugter von höchstens 100 ppm. Der Stickoxidanteil kann mit einem Chemolumineszenz-Messgerät bestimmt werden. Ein entsprechendes Verfahren ist ein dem Fachmann bekanntes Standard-Verfahren.

Das erfindungsgemäße Verfahren ist in Abbildung 1 **(Fig. 1****)** beispielhaft illustriert. Innerhalb von **Fig. 1** wird die Ammoniakverbrennung auf der linken Seite der Abbildung in einem zweistufigen Prozess und auf der rechten Seite in einem dreistufigen Prozess veranschaulicht. Im Fall des zweistufigen Prozesses wird ein Ammoniak-Luft-Gemisch mit Luftunterschuss in der ersten Stufe 1) in den Eingang eines Strömungsrohrreaktors eingeführt und darin über eine innerhalb des Rohres befindliche Katalysatorschicht geleitet. Der Reaktor weist eine Hochtemperaturisolation auf. Nach Durchlaufen der Katalysatorschicht tritt das nach Leitung über die Katalysatorschicht erhaltene Produktgemisch aus Wasserstoff, Wasser und Stickstoff sowie geringen Mengen an noch vorhandenem Ammoniak aus dem Reaktorausgang aus. In der nun folgenden zweiten Stufe 2) des Verfahrens wird das Produktgemisch vollständig durch Zufuhr von Zusatzluft unter insgesamt vorliegenden Luftüberschuss oxidiert. Im Fall des dreistufigen Prozesses erfolgt die erste Stufe 1) wie im Fall des zweistufigen Prozesses beschrieben. Jedoch wird das nach der ersten Stufe erhaltene Produktgemisch in der zweiten Stufe 1a) des dreistufigen Prozesses unter insgesamt immer noch vorliegenden Luftunterschuss oxidiert: es wird zwar in der zweiten Stufe 1a) weitere Zusatzluft zugeführt, jedoch in einer solchen Menge, die nicht ausreichend ist, um insgesamt einen Luftüberschuss zu generieren. Der Reaktor enthält in der beispielhaften Illustration gemäß **Fig. 1** in der zweiten Stufe 1a) Einbauten zur Gasverwirbelung. Nach Durchlaufen der zweiten Stufe 1a) wird das erhaltene Produktgemisch mittels Einsatzes von Wasser und/oder Inertgas und/oder mittels des Einsatzes eines Wärmetauschers in der beispielhaften Illustration gemäß **Fig. 1** zwischengekühlt. In der dann folgenden dritten Stufe 2) des Verfahrens wird das nach der zweiten Stufe 1a) erhaltene Produktgemisch vollständig durch Zufuhr von Zusatzluft unter insgesamt vorliegendem Luftüberschuss oxidiert.

### Produktgas-Mischungen PM1 und PM2

Ein weiterer Gegenstand der vorliegenden Erfindung ist eine Produktgas-Mischung PM1 erhältlich nach Durchführung von Stufe 1) des erfindungsgemäßen Verfahrens, oder eine Produktgas-Mischung PM2 erhältlich nach Durchführung von Stufe 1a) des erfindungsgemäßen Verfahrens, wobei die nach Stufe 1) erhältliche erste Produktgas-Mischung PM1 als wesentliche Bestandteile Stickstoff, Wasserstoff und Wasser in Form von Wasserdampf sowie einen Anteil an nicht umgesetzten Ammoniak enthält, wobei der Anteil an nicht umgesetzten Ammoniak vorzugsweise <5 000 ppm, noch bevorzugter <1000 ppm ist, und wobei die nach Stufe 1a) erhältliche zweite Produktgas-Mischung PM2 als wesentliche Bestandteile Stickstoff, Wasserstoff und Wasser in Form von Wasserdampf sowie einen Anteil an nicht umgesetzten Ammoniak enthält, wobei der Anteil an nicht umgesetzten Ammoniak vorzugsweise <2 000 ppm, noch bevorzugter <750 ppm ist.

Alle im Zusammenhang mit dem erfindungsgemäßen Verfahren hierin zuvor beschriebene bevorzugte Ausführungsformen sind auch bevorzugte Ausführungsformen hinsichtlich der erfindungsgemäßen Produktgas-Mischungen. Der Anteil an Ammoniak in PM1 ist abhängig von dem in Stufe 1) vorliegenden bzw. gewählten Mischungsverhältnis Λ. Vorzugsweise enthält die erste Produktgas-Mischung PM1 40 bis 70 Vol.-%, insbesondere 52 bis 62 Vol.-%, Stickstoff, 15 bis 30 Vol.-%, insbesondere 19 bis 24 Vol.-%, Wasserstoff, sowie 15 bis 30 Vol.-%, insbesondere 19 bis 24 Vol.-%, Wasserdampf, sowie ein oder mehrere weitere Bestandteile in geringen Mengen, wobei sich die Anteile aller in PM1 vorhandenen Bestandteile auf 100 Vol.-% summieren. Der Anteil an Ammoniak ist dabei unter die ein oder mehreren weiteren Bestandteilen zu subsumieren und liegt wie vorstehend erwähnt vorzugsweise in einem Bereich von <5 000 ppm, noch bevorzugter <1000 ppm. Der Anteil an nicht umgesetztem Ammoniak sollte vergleichsweise klein gehalten werden, um die mögliche Bildung von Stickoxiden in der nachfolgenden Oxidation gemäß Stufe 2) zu verringern.

Der Anteil an Ammoniak in PM2 ist abhängig von dem in Stufe 1) und Stufe 1a) insgesamt vorliegenden bzw. gewählten Mischungsverhältnis Λ. Vorzugsweise enthält die zweite Produktgas-Mischung PM2 50 bis 75 Vol.-%, insbesondere 60 bis 70 Vol.-%, Stickstoff, 1 bis 20 Vol.-%, insbesondere 3 bis 18 Vol.-%, Wasserstoff, sowie 15 bis 30 Vol.-%, insbesondere 20 bis 28 Vol.-%, Wasserdampf, sowie ein oder mehrere weitere Bestandteile in geringen Mengen, wobei sich die Anteile aller in PM2 vorhandenen Bestandteile auf 100 Vol.-% summieren. Der Anteil an Ammoniak ist dabei unter die ein oder mehreren weiteren Bestandteilen zu subsumieren und liegt wie vorstehend erwähnt vorzugsweise in einem Bereich von <2 000 ppm, noch bevorzugter <750 ppm. Der Anteil an nicht umgesetztem Ammoniak sollte vergleichsweise klein gehalten werden, um die mögliche Bildung von Stickoxiden in der nachfolgenden Oxidation gemäß Stufe 2) zu verringern.

### Verwendung

Ein weiterer Gegenstand der vorliegenden Erfindung ist eine Verwendung der erfindungsgemäßen Produktgas-Mischungen PM1 und/oder PM2 als Brennstoff in industriellen Brennprozessen, vorzugsweise mittels Durchführung von Stufe 2) des erfindungsgemäßen Verfahrens, insbesondere im Bereich der Glas-, Keramik- und/oder Baustoffindustrie und/oder in der Metallverarbeitung, Gebäudebeheizung und/oder im Betrieb von Wärmekraftmaschinen.

### Beispiele

Das nachfolgende Ausführungsbeispiel dient der Erläuterung der Erfindung, ist jedoch nicht einschränkend auszulegen.

### Aufbau des eingesetzten Reaktors

Es wurde ein Strömungsrohrreaktor gewählt, der aus einem Edelstahlrohr mit 115 mm Außendurchmesser und 3 mm Wandstärke besteht. Ein Beispiel eines solchen Reaktors ist in **Fig.1** illustriert. Die Länge des Rohres beträgt 20 cm. Als Katalysator wurde ein zylindrischer Aluminiumoxidträger mit 15 mm Durchmesser und 20 mm Länge verwendet, der 5 Gew.-% Nickel beinhaltet. Die Katalysatorschüttung hat eine Höhe von 18 cm und ist zwischen zwei Lochblechen eingeschlossen. Das Lochblech am Reaktorausgang befindet sich ca. 1 cm vom Abschlussdeckel des Reaktors entfernt. Der Freiraum am Reaktoreingang beträgt ebenfalls ca. 1 cm. Das Frischgas in Form von Ammoniak und Luft wurde in vorgemischtem Zustand dem Eingangsrohr des Reaktors zugeführt. Die Hochtemperaturisolation des Reaktors besteht aus einer ca. 5 cm starken Schicht von Dämmplatten aus Silicium- und Zirkonoxiden. Der Wärmeverlust bei 1000 °C Reaktortemperatur liegt bei ca. 200 bis 400 W. Bei der vorgenannten Betriebstemperatur von ca. 1 000 °C bleibt die Hauptreaktionszone stationär am Reaktoreingang stehen. Längs des Reaktors liegen auf der Außenseite nur geringe Temperaturunterschiede vor. Auch der eingangsseitige Deckel des Reaktors nimmt weitgehend die Katalysatortemperatur an. Aufgrund dessen erfolgt, wenn überhaupt, nur eine geringe Kühlung durch das kalt einströmende Frischgas. Die Temperatur des Deckels wird somit weitgehend von der hohen Wärmestrahlung aus der Katalysatorschicht bestimmt.

Die Anschlussrohre am Reaktoreingang und Reaktorausgang bestehen ebenfalls aus einem Edelstahlrohr, welches einen Außendurchmesser von 34 mm bei einer Wandstärke von ca. 2 mm aufweist. Die Gesamtlänge des Rohres am Reaktorausgang beträgt 75 cm. Die Zumischung der Verbrennungsluft im dreistufigen Prozess für die zweite Stufe erfolgt in 7 cm Abstand vom Reaktordeckel, die Zumischung für die dritte Stufe im Abstand von ca. 45 cm vom Reaktordeckel. Nach der Zumischung im Rahmen der zweiten Stufe im dreistufigen Prozess sind Metallringe in das Stahlrohr zur besseren Vermischung von Gas und zugeführter Luft eingebaut.

### Verfahrensdurchführung

Für den Betrieb der ersten Stufe des Brenners wurden im Ausführungsbeispiel sind die folgenden Parameter gewählt bzw. beobachtet:

| | |
|---|---|
| Eingangsgasstrom NH₃: | 35 l/min |
| Luftstrom am Reaktoreingang: | 66 l/min |
| Gemessene Reaktortemperatur: | 1000 °C |
| Berechnete adiabatische Temperatur: | ca. 1100 °C |
| | (mit spezifischer Wärme der Produkte bei 500°C) |
| Brennerleistung bzw. Heizwert des Ammoniaks: | 8,2 kW |
| Lambda-Wert der ersten Stufe: | 0,53 |
| Raumgeschwindigkeit am Spaltkatalysator: | ca. 3600 /h (bezogen auf das Leerrohr bei Raumtemperatur und die Gasmischung im Reaktoreingang) |
| Verweilzeit im Katalysator: | ca. 1 s |
| Gasströmungsgeschwindigkeit im Katalysator: | ca. 18 cm/s (bezogen auf das Leerrohr bei Raumtemperatur) |
| Tatsächliche Gasströmungsgeschwindigkeit im Katalysator: | ca. 2,6 m/s (bezogen auf ein Zwischenkornvolumen von 0,3 und eine Temperatur von 1 000 °C) |
| erforderlicher Luftstrom bei | |
| stöchiometrischer Verbrennung: | 125 l/min |
| gemessener Ammoniakschlupf: | < 0,1 % |

Im Fall eines zweistufigen Betriebs werden in der zweiten Stufe nochmals mindestens 60 l/min an Luft eingespeist, um einen Luftüberschuss bzw. einen Lambda-Wert über eins zu erhalten. Unter diesen Bedingungen wurden Stickoxidkonzentrationen von ca. 200 - 300 ppm gemessen.

Im Fall eines dreistufigen Betriebs werden bei unverändertem Betrieb der ersten Stufe 35 l/min Luft in der zweiten Stufe zudosiert. Für die zweite Stufe ergibt sich dann ein Lambda-Wert von 0,81 bei einer adiabatischen Endtemperatur von ca. 1 500 °C. Die Temperatur ist damit ausreichend hoch, damit eine Oxidation bzw. Spaltung von Ammoniak auch in der Gasphase erfolgen kann.

Im Fall eines dreistufigen Betriebs werden bei unverändertem Betrieb der ersten beiden Stufen nochmals 35 I/min Luft in der dritten Stufe zudosiert. Für die dritte Stufe ergibt sich dann ein Lambda-Wert von 1,1 bei einer adiabatischen Endtemperatur von ca. 1 700 °C. Im dreistufigen Betrieb werden die Stickoxidkonzentrationen auf unter 100 ppm reduziert.

## Patentansprüche

1. Ein mindestens zwei- oder dreistufiges Verfahren zur Verbrennung von Ammoniak mit Luft, welches wenigstens die Stufen 1) und 2) und optional zudem die Stufe 1a) umfasst, nämlich
1) eine partielle und katalytische Oxidation von Ammoniak innerhalb eines Reaktors enthaltend wenigstens einen ersten Katalysator K1 unter Erhalt einer ersten Produktgas-Mischung PM1,
wobei während der Durchführung von Stufe 1) ein Luftunterschuss in der Art vorliegt, dass das Mischungsverhältnis Λ zwischen in Stufe 1) zugeführter Luftmenge und der zur stöchiometrischen Oxidation des vorhandenen Ammoniaks zu Stickstoff und Wasser erforderlichen Luftmenge in einem Bereich von 0,30 bis <1,00 liegt,
1a) optional eine weitere partielle Oxidation der nach Durchführung von Stufe 1) erhaltenen ersten Produktgas-Mischung PM1 in der Gasphase unter Erhalt einer zweiten Produktgas-Mischung PM2,
wobei während der Durchführung von Stufe 1a) noch immer ein Luftunterschuss in der Art vorliegt, dass das Mischungsverhältnis Λ zwischen in Stufe 1) und in Stufe 1a) insgesamt zugeführter Luftmenge und der zur stöchiometrischen Oxidation des vorhandenen Ammoniaks zu Stickstoff und Wasser erforderlichen Luftmenge in einem Bereich von 0,30 bis <1,00 liegt, wobei jedoch das insgesamt nach Durchlaufen beider Stufen 1) und 1a) vorliegende Mischungsverhältnis s Λ das nur nach Durchlaufen der Stufe 1) vorliegende Mischungsverhältnis Λ übersteigt, und
2) eine vollständige Oxidation der nach Stufe 1) erhaltenen ersten Produktgas-Mischung PM1 oder, falls der optionale Schritt 1a) durchgeführt worden ist, der nach Stufe 1a) erhaltenen zweiten Produktgas-Mischung PM2,
wobei während der Durchführung von Stufe 2) ein Luftüberschuss in der Art vorliegt, dass das Mischungsverhältnis Λ zwischen in Stufe 1), optional in Stufe 1a), sowie in Stufe 2) insgesamt zugeführter Luftmenge und der zur stöchiometrischen Oxidation des vorhandenen Ammoniaks zu Stickstoff und Wasser erforderlichen Luftmenge in einem Bereich ≥1,00 liegt.

2. Das Verfahren gemäß Anspruch 1, **dadurch gekennzeichnet, dass** während der Durchführung von Stufe 1) das Mischungsverhältnis Λ zwischen zugeführter Luftmenge und der zur stöchiometrischen Oxidation des vorhandenen Ammoniaks zu Stickstoff und Wasser erforderlichen Luftmenge in einem Bereich von 0,30 bis 0,90 oder bis 0,80, besonders bevorzugt von 0,35 bis 0,70, ganz besonders bevorzugt von 0,40 bis 0,60, noch bevorzugter von 0,45 bis <0,60, liegt.

3. Das Verfahren gemäß Anspruch 1 oder 2, **dadurch gekennzeichnet, dass** die vorzugsweise adiabatische Endtemperatur der nach Stufe 1) erhaltenen ersten Produktgas-Mischung PM1 in einem Bereich von 500 bis 1400 °C, vorzugsweise von 600 bis 1200 °C liegt.

4. Das Verfahren gemäß einem oder mehreren der vorstehenden Ansprüche **dadurch gekennzeichnet, dass** die nach Stufe 1) erhältliche erste Produktgas-Mischung PM1 als wesentliche Bestandteile Stickstoff, Wasserstoff und Wasser in Form von Wasserdampf sowie einen Anteil an nicht umgesetzten Ammoniak enthält, wobei der Anteil an nicht umgesetzten Ammoniak vorzugsweise >0 aber <5000 ppm, noch bevorzugter >0 aber <1000 ppm ist.

5. Das Verfahren gemäß einem oder mehreren der vorstehenden Ansprüche **dadurch gekennzeichnet, dass** der im Reaktor gemäß Stufe 1) vorhandene erste Katalysator K1 ein Katalysator zur Spaltung von Ammoniak in Stickstoff und Wasserstoff ist, wobei die katalytisch aktive Komponente des Katalysators K1 vorzugsweise wenigstens ein Metall umfasst, besonders bevorzugt wenigstens ein Metall ausgewählt aus der Gruppe umfassend Nickel, Eisen, Ruthenium und Mischungen davon, wobei der Katalysator K1 vorzugsweise auf wenigstens einem Träger, besonders bevorzugt auf wenigstens einem Träger umfassend Aluminiumoxid und/oder Magnesiumoxid als Trägermaterial(ein) aufgebracht ist.

6. Das Verfahren gemäß Anspruch 5, **dadurch gekennzeichnet, dass** neben dem ersten Katalysator K1 wenigstens ein zweiter Katalysator K2 im Reaktor gemäß Stufe 1) vorhanden ist, welcher ein Katalysator zur Oxidation von Ammoniak in Stickstoff und Wasser ist, wobei die katalytisch aktive Komponente des Katalysators K2 vorzugsweise wenigstens ein Metall umfasst, besonders bevorzugt wenigstens ein Metall, welches sich von der katalytisch aktiven Komponente des Katalysators K1 unterscheidet, ganz besonders bevorzugt welches ausgewählt ist aus der Gruppe umfassend Platin, Palladium und Mischungen davon, wobei der Katalysator K2 vorzugsweise auf wenigstens einem Träger, besonders bevorzugt auf wenigstens einem Träger umfassend Aluminiumoxid und/oder Magnesiumoxid als Trägermaterial(ein) aufgebracht ist, ganz besonders bevorzugt auf demselben Träger, auf dem auch Katalysator K1 aufgebracht ist,

7. Das Verfahren gemäß einem oder mehreren der vorstehenden Ansprüche **dadurch gekennzeichnet, dass** die Geometrie des zur Durchführung von Stufe 1) eingesetzten Reaktors, welcher vorzugsweise ein Rohrreaktor ist, und/oder die Temperatur des ersten Katalysators K1 so gewählt ist, dass ein ausreichender Wärmetransport wenigstens durch Wärmestrahlung gegen die Strömungsrichtung der in den Reaktor eingeleiteten Gase bzw. Gasmischung erfolgt, wobei die Geometrie vorzugsweise das Verhältnis von Rohrquerschnitt zu Rohrlänge beschreibt.

8. Das Verfahren gemäß einem oder mehreren der vorstehenden Ansprüche **dadurch gekennzeichnet, dass** die Oxidation gemäß Stufe 2) mit Luft als Oxidationsmittel in einer offenen Flamme oder katalytisch mittels wenigstens eines geeigneten Oxidationskatalysators erfolgt.

9. Das Verfahren gemäß einem oder mehreren der vorstehenden Ansprüche **dadurch gekennzeichnet, dass** die Oxidation gemäß Stufe 2) zu einer Emission an Stickoxiden von höchstens 250 ppm, vorzugsweise von höchstens 200 ppm, noch bevorzugter von höchstens 100 ppm, führt.

10. Das Verfahren gemäß einem oder mehreren der vorstehenden Ansprüche **dadurch gekennzeichnet, dass** die nach Durchführung von Stufe 1) erhaltene erste Produktgas-Mischung PM1 vor Durchführung von Stufe 2) oder die nach Durchführung von Stufe 1a) erhaltene zweite Produktgas-Mischung PM2 vor Durchführung von Stufe 2) gekühlt wird, vorzugsweise mittels wenigstens eines Wärmetauschers, über die Einspeisung von Inertgas und/oder über die Einspeisung von Wasser.

11. Das Verfahren gemäß einem oder mehreren der vorstehenden Ansprüche **dadurch gekennzeichnet, dass** kein Erwärmen der in Stufe 1) eingesetzten Gase bzw. Gasmischung vor Durchführung der Stufe 1) durchgeführt wird, besonders bevorzugt weder ein Erwärmen des eingesetzten Ammoniaks noch der eingesetzten Luftmenge noch einer vorliegenden Ammoniak-Luft-Mischung, jeweils im Sinne eines Vorheizens.

12. Ein Produktgas-Mischung PM1 erhältlich nach Durchführung von Stufe 1) gemäß einem oder mehreren der Ansprüche 1 bis 7, 10 oder 11, oder eine Produktgas-Mischung PM2 erhältlich nach Durchführung von Stufe 1a) gemäß einem oder mehreren der Ansprüche 1 bis 7, 10 oder 11, wobei die nach Stufe 1) erhältliche erste Produktgas-Mischung PM1 als wesentliche Bestandteile Stickstoff, Wasserstoff und Wasser in Form von Wasserdampf sowie einen Anteil an nicht umgesetzten Ammoniak enthält, wobei der Anteil an nicht umgesetzten Ammoniak >0 aber <5000 ppm, vorzugsweise <1000 ppm ist, und wobei die nach Stufe 1a) erhältliche zweite Produktgas-Mischung PM2 als wesentliche Bestandteile Stickstoff, Wasserstoff und Wasser in Form von Wasserdampf sowie einen Anteil an nicht umgesetzten Ammoniak enthält, wobei der Anteil an nicht umgesetzten Ammoniak >0 aber <2000 ppm, vorzugsweise <750 ppm ist.

13. Die Produktgas-Mischung PM1 oder PM2 gemäß Anspruch 12, **dadurch gekennzeichnet, dass** die Produktgas-Mischung PM1 40 bis 70 Vol.-%, vorzugsweise 52 bis 62 Vol.-%, Stickstoff, 15 bis 30 Vol.-%, vorzugsweise 19 bis 24 Vol.-%, Wasserstoff, sowie 15 bis 30 Vol.-%, vorzugsweise 19 bis 24 Vol.-%, Wasserdampf, enthält, wobei sich die Anteile aller in PM1 vorhandenen Bestandteile auf 100 Vol.-% summieren, und/oder dass die die Produktgas-Mischung PM2 50 bis 75 Vol.-%, vorzugsweise 60 bis 70 Vol.-%, Stickstoff, 1 bis 20 Vol.-%, vorzugsweise 3 bis 18 Vol.-%, Wasserstoff, sowie 15 bis 30 Vol.-%, vorzugsweise 20 bis 28 Vol.-%, Wasserdampf, enthält, wobei sich die Anteile aller in PM2 vorhandenen Bestandteile auf 100 Vol.-% summieren.

14. Eine Verwendung von wenigstens einer der Produktgas-Mischungen PM1 und PM2 gemäß Anspruch 12 oder 13 als Brennstoff in industriellen Brennprozessen, vorzugsweise mittels Durchführung von Stufe 2) des Verfahrens gemäß einem oder mehreren der Ansprüche 1, 8 und 9, insbesondere im Bereich der Glas-, Keramik- und/oder Baustoffindustrie und/oder in der Metallverarbeitung, Gebäudebeheizung und/oder im Betrieb von Wärmekraftmaschinen.
